# EUROPÄISCHE PATENTSCHRIFT

(11) **EP 4 037 865 B1**
(45) Veröffentlichungstag und Bekanntmachung des Hinweises auf die Patenterteilung: **15.11.2023**
(21) Anmeldenummer: 20819724.4
(22) Anmeldetag: 03.12.2020
(51) Int. Cl.: B23K 26/0622, B23K 26/06, B23K 26/082, B23K 26/382, B23K 26/384, B23K 26/388, B23K 26/402, B23K 101/34, B23K 103/08, B23K 103/10, B23K 103/12, B23K 103/18, B23K 103/00

(54) **VERFAHREN ZUM BEARBEITEN UND BEFESTIGEN EINES METALL-KERAMIK-SUBSTRATE**
METHOD FOR MACHINING AND FIXING A METAL-CERAMIC SUBSTRATE,
PROCÉDÉ D'USINAGE ET DE FIXATION D'UN SUBSTRAT MÉTAL-CÉRAMIQUE

(30) Priorität: 11.12.2019 DE 102019134004
(43) Veröffentlichungstag der Anmeldung: 10.08.2022
(73) Patentinhaber: Rogers Germany GmbH, 92676 Eschenbach (DE)
(72) Erfinder: KOHL, Thomas, 91275 Auerbach (DE); RETTINGER, Bernhard, 92670 Windischeschenbach (DE)
(74) Vertreter: Müller Schupfner & Partner Patent- und Rechtsanwaltspartnerschaft mbB
(86) Internationale Anmeldenummer: PCT/EP2020/084469
(87) Internationale Veröffentlichungsnummer: WO 2021/115921

(56) Entgegenhaltungen:
- EP-A1- 3 417 982
- CN-A- 109 128 533
- JP-A- H0 575 253
- JP-A- 2002 261 439

## Beschreibung

Die vorliegende Erfindung betrifft ein Verfahren zum Bearbeiten und Befestigen von Metall-Keramik-Substraten.

Elektronikmodule sind aus dem Stand der Technik, beispielsweise als Leistungselektronikmodule, hinlänglich bekannt. Solche Elektronikmodule nutzen typischerweise schaltbare bzw. steuerbare Elektronikbauteile, die auf einem gemeinsamen Metall-Keramik-Substrat über Leiterbahnen miteinander verschaltet sind. Wesentliche Bestandteile des Metall-Keramik-Substrats sind dabei eine Isolationsschicht, die im Falle des Metall-Keramik-Substrats aus einem eine Keramik umfassenden Material gefertigt ist, und eine Metallisierungsschicht, die zur Bildung von Leiterbahnen vorzugsweise strukturiert und an einer Bauteilseite des Metall-Keramik-Substrats ausgebildet ist.

Typischerweise wird dabei ein Metall-Keramik-Substrat als Großkarte realisiert, die nach oder vor dem Strukturieren in kleinere Metall-Keramik-Substrate vereinzelt wird. Solche Großkarten werden dazu mittels Laserlichts zur Herstellung von Sollbruchlinien und/oder Trennstellen bearbeitet. Anschließend lassen sich die jeweiligen Metall-Keramik-Substrate aus der Großkarte, z. B. durch Herausbrechen, vereinzelt bereitstellen. Hierbei hat sich die Verwendung von Ultrakurzpulslasern als vorteilhaft erwiesen, wie es beispielsweise in der WO 2017 / 108 950 A1 beschrieben ist.

Aus der US 2016 0 207 143 A1 ist ein Verfahren zur Bearbeitung eines Werkstücks mit Laserlicht bekannt, wobei das Werkstück auf einer Bühne platziert ist. Auch die EP 0 826 457 A1 betrifft das Herstellen von Bohrlöchern mittels Laserlicht.

Aus der CN 109 128 533 A und JP H05 75253 A sind Verfahren zur Herstellung von Aussparungen bekannt. Allerdings sehen diese Aussparungen keine Befestigungen mit einem Befestigungselement vor. In der DE 10 2013 102540 A1 (offenbarend alle Merkmale/Schritte des Oberbegriffes des Anspruchs 1) wird ein Verfahren zum Befestigen eines Metall-Keramik-Substrats an einem anderen Bauteil vorgeschlagen. Hierfür ist allerdings keine Aussparung vorgesehen.

Ausgehend von diesem Stand der Technik macht es sich die vorliegende Erfindung zur Aufgabe, das Bearbeiten und Befestigen von Metall-Keramik-Substraten zu verbessern

Diese Aufgabe wird gelöst durch ein Verfahren zur Bearbeitung und Befestigen eines Metall-Keramik-Substrats gemäß Anspruch 1. Weitere Ausführungsbeispiele sind den Unteransprüchen und der Beschreibung zu entnehmen.

Gegenüber den aus dem Stand der Technik bekannten Verfahren ist zur Ausbildung der Aussparung Laserlicht vorgesehen, insbesondere ein UKP-Laser, zu verwenden. Dabei versteht der Fachmann unter einer Aussparung einen vom Metall-Keramik-Substrat vorzugsweise in einer Ebene zu mehr als 50 % bevorzugt mehr als 75% und besonders bevorzugt vollständig umgebenen bzw. umschlossenen Bereich, der frei ist von Metall und/oder Keramik. Beispielsweise wird die Aussparung umgeben von einer gebogenen oder polygonen Kontur, die mittels eines Laserlichts hergestellt wird. Dabei ist es entsprechend der Erfindung, dass die Aussparung als Bereich verwendet wird, durch den ein Befestigungselement, wie eine Schraube und/oder ein Bolzen, hindurchgreift, um das Metall-Keramik-Substrat an einem Gehäuse und/oder einem anderen Bauteil zu befestigen. Die Herstellung mittels Laserlichts hat sich insbesondere in Bezug auf die Qualität und Fertigungszeit bei dem Ausbilden der Aussparungen als vorteilhaft erwiesen. Beispielsweise lässt sich unter Verwendung von Ultrakurzpulslaserlicht die Anzahl der Nachbearbeitungsschritte für das Metall-Keramik-Substrat reduzieren. Außerdem ist es in vorteilhafter Weise möglich, beispielsweise über ein entsprechendes Spiegelelement, das Laserlicht scanartig über die Oberseite des Metall-Keramik-Substrats zu führen, um die gewünschte Form und Kontur der Aussparung zu realisieren.

Entsprechend der Erfindung ist es vorgesehen, dass die Aussparung durch das gesamte Metall-Keramik-Substrat hindurchgreift, d. h. von einer Oberseite des Metall-Keramik-Substrats bis zu einer Rückseite des Metall-Keramik-Substrats reicht. Dabei wird das Metall-Keramik-Substrat vorzugsweise von einem Träger bzw. Halteelment während des Bearbeitens mittels des Laserlichts gehalten bzw. fixiert. Ferner umfasst das Metall-Keramik-Substrat mindestens eine Metallschicht, die an einer Oberseite einer Keramikschicht stoffschlüssig angebunden ist, wobei sich die Metallschicht und die Keramikschicht entlang einer Haupterstreckungsebene erstrecken und entlang einer senkrecht zur Haupterstreckungsebene verlaufenden Stapelrichtung übereinander angeordnet sind. Als Materialien für die mindestens eine Metallschicht sind Kupfer, Aluminium, Molybdän und/oder deren Legierungen, sowie Laminate wie CuW, CuMo, CuAl, AlCu und/oder CuCu vorstellbar, insbesondere eine Kupfer-Sandwichstruktur mit einer ersten Kupferschicht und einer zweiten Kupferschicht, wobei sich eine Korngröße in der ersten Kupferschicht von einer zweiten Kupferschicht unterscheidet. Weiterhin ist bevorzugt vorgesehen, dass die mindestens eine Metallschicht oberflächenmodifiziert ist. Als Oberflächenmodifikation ist beispielsweise eine Versiegelung mit einem Edelmetall, insbesondere Silber und/oder Gold, oder ENIG ("*electroless nickel immersion gold*") oder ein Kantenverguss an der ersten bzw. zweiten Metallisierungsschicht zur Unterdrückung einer Rissbildung bzw. -weitung denkbar.

Beispielswiese handelt es sich bei dem Keramikelement um mindestens eine Keramikschicht oder ein Verbund, der mindestens eine Keramikschicht aufweist. Vorzugsweise weist mindestens eine die Keramikschicht Al₂O₃, Si₃N₄, AIN, eine HPSX-Keramik (d. h. eine Keramik mit einer Al₂O₃- Matrix, die einen x-prozentigen Anteil an ZrO₂ umfasst, beispielsweise Al₂O₃ mit 9% ZrO₂ = HPS9 oder Al₂O₃ mit 25% ZrO₂ = HPS25), SiC, BeO, MgO, hochdichtes MgO (> 90% der theoretischen Dichte), TSZ (tetragonal stabilisiertes Zirkonoxid) oder ZTA als Material für die Keramik auf. Es ist dabei auch vorstellbar, dass die Isolationsschicht als Verbund- bzw. Hybridkeramik ausgebildet ist, bei der zur Kombination verschiedener gewünschter Eigenschaften mehrere Keramikschichten, die sich jeweils in Hinblick auf ihre materielle Zusammensetzung unterscheiden, übereinander angeordnet und zu einer Isolationsschicht zusammengefügt sind. Vorzugsweise wird eine möglichst wärmeleitfähige Keramik für einen möglichst geringen Wärmwiderstand verwendet.

Unter einem Keramikelement bzw. einer Keramikschicht wird vorzugsweise kein Glas verstanden oder ein Material, das zu mehr als 50 % aus einem Glas besteht. Es handelt sich somit bei dem Keramikelement vorzugsweise um ein glasfreies Keramikelement. Vorzugsweise ist es vorgesehen, dass die Aussparung durch das widerholte Überfahren des Metall-Keramik-Substrats entlang derselben Kontur erzeugt wird.

Dabei wird vorzugsweise die Metallschicht an die Isolierschicht mittels eines AMB-Verfahrens und/oder ein DCB-Verfahren stoffschlüssig angebunden.

Unter einem "DCB-Verfahren" (Direct-Copper-Bond-Technology) oder einem "DAB-Verfahren" (Direct-Aluminium-Bond-Technology) versteht der Fachmann ein solches Verfahren, das beispielsweise zum Verbinden von Metallschichten oder - blechen (z. B. Kupferblechen oder -folien oder Aluminiumblechen oder -folien) miteinander und/oder mit Keramik oder Keramikschichten dient, und zwar unter Verwendung von Metall- bzw. Kupferblechen oder Metall- bzw. Kupferfolien, die an ihren Oberflächenseiten eine Schicht oder einen Überzug (Aufschmelzschicht), aufweisen. Bei diesem beispielsweise in der US 3 744 120 A oder in der DE 23 19 854 C2 beschriebenen Verfahren bildet diese Schicht oder dieser Überzug (Aufschmelzschicht) ein Eutektikum mit einer Schmelztemperatur unter der Schmelztemperatur des Metalls (z. B. Kupfers), so dass durch Auflegen der Folie auf die Keramik und durch Erhitzen sämtlicher Schichten diese miteinander verbunden werden können, und zwar durch Aufschmelzen des Metalls bzw. Kupfers im Wesentlichen nur im Bereich der Aufschmelzschicht bzw. Oxidschicht.

Insbesondere weist das DCB-Verfahren dann z. B. folgende Verfahrensschritte auf:
- Oxidieren einer Kupferfolie derart, dass sich eine gleichmäßige Kupferoxidschicht ergibt;
- Auflegen des Kupferfolie auf die Keramikschicht;
- Erhitzen des Verbundes auf eine Prozesstemperatur zwischen etwa 1025 bis 1083°C, z. B. auf ca. 1071 °C;
- Abkühlen auf Raumtemperatur.

Unter einem Aktivlot-Verfahren z. B. zum Verbinden von Metallschichten oder Metallfolien, insbesondere auch von Kupferschichten oder Kupferfolien mit Keramikmaterial ist ein Verfahren zu verstehen, welches speziell auch zum Herstellen von Metall-Keramik-Substraten verwendet wird, wird bei einer Temperatur zwischen ca.650-1000°C eine Verbindung zwischen einer Metallfolie, beispielsweise Kupferfolie, und einem Keramiksubstrat, beispielsweise Aluminiumnitrid-Keramik, unter Verwendung eines Hartlots hergestellt, welches zusätzlich zu einer Hauptkomponente wie Kupfer, Silber und/oder Gold auch ein Aktivmetall enthält. Dieses Aktivmetall, welches beispielsweise wenigstens ein Element der Gruppe Hf, Ti, Zr, Nb, Ce ist, stellt durch chemische Reaktion eine Verbindung zwischen dem Lot und der Keramik her, während die Verbindung zwischen dem Lot und dem Metall eine metallische Hartlöt-Verbindung ist. Alternativ ist zur Anbindung auch ein Dickschichtverfahren vorstellbar.

Gemäß einer bevorzugten Ausführungsform ist es vorgesehen, dass das Laserlicht über mindestens ein schwenkbares Spiegelelement oder reflektierendes Element auf das Metall-Keramik-Substrat gelenkt und insbesondere mittels des mindestens einen schwenkbaren Spiegelelements oder reflektierenden Elements über das Metall-Keramik-Substrat bewegt wird. Mittels einer entsprechenden Scanvorrichtung ist es beispielsweise möglich, den Laserstrahl bzw. das Laserlicht möglichst positionsgenau über den geplanten Verlauf der zukünftigen Aussparung, d. h. den Bearbeitungsbereich, zu verfahren. Dabei ist es insbesondere vorgesehen, dass das mindestens eine Spiegelelement an die verwendete Pulsdauer und/oder Wellenlänge des Laserlichts angepasst ist, um Verluste bei der Reflektion am mindestens einen Spiegelelement zu reduzieren. Weiterhin ist es vorstellbar, dass es sich bei dem mindestens einen Spiegelelement um einen Hohlspiegel und/oder einen dielektrischen Spiegel handelt, um den Laserstrahl zumindest teilweise bereits zu fokussieren, vorzugsweise nach und/oder vor Durchtritt durch eine zusätzliche Linse. Durch das Fokussieren, insbesondere mittels einer Linse, lässt sich in vorteilhafter Weise die Intensität der auftreffenden Laserpulse erhöhen. Weiterhin ist es besonders bevorzugt vorgesehen, dass das mindestens eine Spiegelelement um mindestens zwei Achsen verschwenkbar ist. Dadurch lässt sich sicherstellen, dass mittels der jeweiligen Ausrichtung des Spiegelelements jeder Punkt an der Oberseite des Metall-Keramik-Substrats vom Lichtstrahl erfasst werden kann. Vorzugsweise handelt es sich um genau ein Spiegelelement.

Vorzugsweise handelt es sich bei dem UKP-Laser um eine Laserquelle, die Lichtpulse mit einer Pulsdauer von 0,1 bis 800 ps, bevorzugt 1 bis 500 ps, besonders bevorzugt von 10 bis 50 ps bereitstellt. Es hat sich als besonders vorteilhaft herausgestellt, mittels derartiger Pulse, insbesondere mit den oben genannten Bearbeitungsgeschwindigkeiten, Aussparungen und/oder Sollbruchlinien bzw. Sollbruchstellen herzustellen, die ein besonders günstiges Verhältnis zwischen aufgeschmelzter Keramik und Rissbildung innerhalb der Sollbruchlinien aufweisen, wodurch beispielsweise im Falle der Sollbruchlinien auch ein besonders zuverlässiges bzw. erfolgreiches Brechen entlang der Sollbruchlinien gewährleistet werden kann, ohne dass Schäden beim Brechen am vereinzelten Metall-Keramik-Substrat entstehen. Vorzugsweise werden Sollbruchlinien zu der Aussparung realisiert, beispielsweise mit demselben Lasersystem.

Vorzugsweise ist es vorgesehen, dass ein parallel zur Haupterstreckungsebene verlaufender Querschnitt der Aussparung größer ist als ein entlang derselben Ebene vermessener Querschnitt des Laserlichts. Vorzugsweise weist der Querschnitt der Aussparung einen ersten Durchmesser und der Querschnitt des Laserlichts einen zweiten Durchmesser auf, wobei ein Verhältnis des zweiten Durchmessers zum ersten Durchmesser einen Wert unterhalb von 0,2, bevorzugt kleiner als 0,1 und besonders bevorzugt kleiner als 0,05 annimmt. Dadurch lässt sich, beispielsweise durch die Bewegung des Laserlichts entlang der Oberseite des Metall-Keramik-Substrats, eine Ausschneidekontur festlegen, die die Form des späteren Querschnitts der Aussparung bestimmt. Insbesondere dient ein solches Bearbeiten der Ausbildung einer Aussparung, durch die im späteren gefertigten Metall-Keramik-Substrat eine Befestigungsvorrichtung bzw. -einrichtung zur Befestigung durchgreift. Derartige Aussparungen mit einem entsprechend großen Querschnitt dienen in der Regel nicht der Ausbildung einer Durchkontaktierung, sondern sind vorzugsweise dazu vorgesehen, dass Metall-Keramik-Substrat einfach an andere Bauteile zu fixieren.

Besonders bevorzugt ist es vorgesehen, dass das Laserlicht über eine Linse auf einen Bearbeitungsbereich des Metall-Keramik-Substrats gerichtet wird, wobei während des Bearbeitens ein Abstand zwischen der Linse und einer Oberseite des Metall-Keramik-Substrats geändert wird. Dabei bezieht sich insbesondere der Abstand zwischen der Linse und der Oberseite des Metall-Keramik-Substrats auf einen Bereich außerhalb des Bereichs, indem die Aussparung entsteht, d. h. außerhalb des Bearbeitungsbereichs. Durch das Nachziehen des Abstandes zwischen Linse und Oberseite des Metall-Keramik-Substrats kann in vorteilhafter Weise berücksichtigt werden, dass im Rahmen des Bearbeitens ein Abtrag am Metall-Keramik-Substrat erfolgt, wodurch ohne ein entsprechendes Verkleinern des Abstandes zwischen Linse und Oberseite des Metall-Keramik-Substrats der Fokus der Linse in einen Bereich fallen würde, in dem bereits ein Abtrag des Metall-Keramik-Substrat-Materials stattgefunden hat. Durch eine entsprechende koordinierte Änderung des Abstandes zwischen der Linse und der Oberseite des Metall-Keramik-Substrats kann in vorteilhafter Weise sichergestellt werden, dass der Fokus des Laserlichts im Bereich des abzutragenden Materials des Metall-Keramik-Substrats angeordnet ist bzw. unmittelbar oberhalb und/oder unterhalb einer Grenzschicht, die abzutragen ist. Hierzu wird vorzugsweise ein Abstand der Linse und des Metall-Keramik-Substrats entlang der Stapelrichtung verändert. Insbesondere entspricht die (Gesamt-)Änderung des Abstandes zwischen Linse und Metall-Keramik-Substrat im Wesentlichen einer in Stapelrichtung bemessenen Dicke des Metall-Keramik-Substrats.

Weiterhin ist es vorstellbar, dass sich eine Neigung des Laserlichts während des Bearbeitens ändert. Dadurch lassen sich beispielsweise die Verläufe der Innenseite der Aussparung wunschgemäß formen. Es ist auch vorstellbar, dass die Aussparung derart gebildet wird, dass ein gestufter Konturverlauf an der Innenseite der Aussparung realisiert wird. Hierdurch lässt sich beispielsweise ein Freibereich an der Oberseite des Metall-Keramik-Substrats bereitstellen, in dem ein Kopf eines Befestigungsmittels versenkt werden kann. Hier kann es beispielsweise von Vorteil sein, während des Bearbeitens in einem ersten Teilabschnitt einen anderen Neigungswinkel der Innenseite der Aussparung vorzusehen, um diesen ersten Teilabschnitt an die Form des Kopfes des Befestigungsmittels anzupassen. Es ist vorzugsweise vorgesehen, dass das Laserlichts zumindest zeitweise, vorzugsweise während des gesamten Bearbeitens, senkrecht auf das Metall-Keramik-Substrat trifft. Dadurch lässt sich eine zylindrische Aussparung mit im wesentlichen konstanten Querschnitt in Stapelrichtung gesehen erzeugen. Beispielsweise ist eine Neigung der Innenseite der Aussparung gegenüber einer Richtung, die senkrecht zur Haupterstreckungsebene verläuft, geringer als 10%, bevorzugt geringer als 5 % und besonders bevorzugt geringer als 2,5 %.

Vorzugsweise erfolgt das Bearbeiten des Metall-Keramik-Substrats ausschließlich im metallfreien Bereich des Metall-Keramik-Substrats. Beispielsweise ist es vorgesehen, dass die Aussparung durch das widerholte Überfahren des Metall-Keramik-Substrats entlang derselben Kontur erzeugt wird.

Beispielsweise ist es auch vorstellbar, dass ein weiteres Laserlicht vorgesehen ist, wobei mittels des Laserlichts und des weiteren Laserlichts die Aussparung ausgebildet wird. Dadurch kann die Herstellung der Aussparung deutlich beschleunigt werden. Vorstellbar ist dabei, dass das Laserlicht und das weitere Laserlicht das Metall-Keramik-Substrat zur selben Zeit das Metall-Keramik-Substrat an verschiedenen Stellen einer gemeinsamen Kontur bearbeiten, wobei das Laserlicht und das weitere Laserlicht beide der gemeinsamen Kontur folgen, um die Aussparung zu bilden.

Weiterhin ist es bevorzugt vorgesehen, dass eine Brennweite der Linse verwendet wird die größer als 300 mm ist. Mit einer vergleichsweise großen Brennweite, insbesondere größer als 300 mm, bevorzugt größer als 350 mm und besonders bevorzugt größer als 430 mm ist es in vorteilhafter Weise möglich, mit dem Laserlicht zusätzlich neben der Aussparung noch Sollbruchlinien zu erzeugen, deren Neigung gegenüber einer senkrecht zur Haupterstreckung verlaufenden Richtung vergleichsweise gering ist. Dadurch kann in vorteilhafter Weise ein gleichmäßiges Bruchverhalten des Metall-Keramik-Substrats, insbesondere über die gesamte Großkarte gesehen, sichergestellt werden. Vorzugsweise wird mit demselben Lasersystem Laserlicht bereitgestellt, mit dem einerseits Sollbruchlinien hergestellt werden und andererseits die Aussparung im Metall-Keramik-Substrat erzeugt wird. Durch die Änderung der Laserparameter und/oder unter Verwendung von Filtern lassen sich die Eigenschaften für das Erzeugen der Sollbruchlinie einerseits und der Aussparung andererseits vorzugsweise verändern.

Insbesondere ist es vorgesehen, dass der Abstand zwischen der Linse und dem Metall-Keramik-Substrats nie die Brennweite der Linse um einen Wert unterschreitet, der größer ist als eine Dicke des Metall-Keramik-Substrats, insbesondere wenn die Linse und/oder das Metall-Keramik-Substrat aufeinander zubewegt werden. So kann sichergestellt werden, dass das Laserlicht stets fokussiert bleibt, insbesondere wenn das Material schichtweise abgetragen wird und der Fokus des Laserlichts nachgezogen wird.

Vorzugsweise ist es vorgesehen, dass eine Änderung des Abstands kontinuierlich oder in diskreten Schritten vorgenommen wird. Insbesondere ist es vorstellbar, dass simultan zum Bearbeiten des Metall-Keramik-Substrats zur Erzeugung der Aussparung ein Vermessen einer Aussparungstiefe, insbesondere einer aktuellen Aussparungstiefe, vollzogen wird, sodass abhängig vom aktuellen Wert für die Aussparungstiefe, der Abstand zwischen Linse und Metall-Keramik-Substrat eingestellt werden kann. Beispielsweise erfolgt das Vermessen der Aussparungstiefe optisch, mittels einer Kamera und/oder eines weiteren Lasersystems. Alternativ oder ergänzend ist es vorstellbar, dass das Laserlicht entlang einer geschlossenen Kontur bewegt wird, wobei nach jeder Überfahrt oder einer festgelegten Anzahl an Überfahrten der geschlossenen Kontur ein diskreter Änderungsschritt des Abstandes zwischen der Linse und dem Metall-Keramik-Substrat vorgenommen wird.

Vorzugsweise ist es vorgesehen, dass das Metall-Keramik-Substrat mindestens eine Rückseitenmetallisierung aufweist, wobei insbesondere die mindestens eine Rückseitenmetallisierung und die mindestens eine Metallisierung an aneinander gegenüberliegenden Seiten des Keramikelements angeordnet sind. Durch das Ausbilden der Aussparung, die bis zur Rückseitenmetallisierung reicht und diese zusätzlich abträgt, ist es in vorteilhafter Weise möglich, Aussparungen zu erzeugen, deren Rückseitenmetallisierungen gratfrei sind, insbesondere an der von dem Keramikelement abgewandten Seite der Rückseitenmetallisierung. Damit unterscheidet sich das Verfahren insbesondere von herkömmlichen Verfahren, beispielsweise solchen, die CO₂-Laser verwenden, dahingehend, dass ein abschließender Nachbearbeitungsschritt, bei dem ein Entgraten der Aussparung vorgenommen wird, wegfällt. Dies beschleunigt das Herstellungsverfahren zur Erzeugung des Metall-Keramik-Substrats, in dem eine Aussparung vorgesehen ist.

Vorzugsweise wird zur Ausbildung der Aussparung das Laserlicht zumindest abschnittweise entlang einer gebogenen Kontur geführt. Insbesondere entspricht die gebogene Kontur einer Bewegungsrichtung, entlang der das Laserlicht geführt wird, sodass sich ein zumindest abschnittsweise kreisförmiger oder runder Verlauf für die Berandung der Aussparung ergibt. Alternativ sind polygone oder eckige oder geradlinige Randverläufe für die Aussparungen vorstellbar, die durch eine entsprechende Einstellung der Bewegungsrichtung des Laserlichts, insbesondere durch die Ausrichtung des Spiegels, realisiert werden.

Weiterhin ist es bevorzugt vorgesehen, dass ein abgetrennter Bestandteil des Metall-Keramik-Substrats entfernt wird, vorzugsweise mittels eines Unterdruckmechanismus. Beispielsweise ist hierzu eine Saugvorrichtung vorgesehen, die vorzugsweise in den Träger integriert ist und unterhalb des Bearbeitungsbereichs bzw. des geplanten Bereichs für die Aussparung angeordnet ist. Folgt das Laserlicht einer entsprechenden Kontur, die die spätere Aussparung berandet, wird der von der Berandung bzw. späteren Berandung der Aussparung umfasste Bereich des Metall-Keramik-Substrats ausgeschnitten. Um das Trennen des ausgeschnittenen Bereichs des Metall-Keramik-Substrats von den übrigen Metall-Keramik-Substrat mit der gefertigten Aussparung zu ermöglichen bzw. erleichtern, ist es in vorteilhafter Weise möglich, mittels des Unterdruckmechanismus den Rest bzw. abgetrennten Teil des Metall-Keramik-Substrats am Träger zu fixieren, während das Metall-Keramik-Substrat vom Träger gelöst wird.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig.1:**: eine schematische Darstellung eines Verfahrens zum Bearbeiten eines Metall-Keramik-Substrats gemäß einer ersten beispielhaften Ausführungsform der vorliegenden Erfindung,
- **Fig. 2:**: eine schematische Darstellung eines Verfahrens zum Bearbeiten eines Metall-Keramik-Substrats gemäß einer zweiten beispielhaften Ausführungsform der vorliegenden Erfindung,
- **Fig. 3**: eine schematische Darstellung eines Verfahrens zum Bearbeiten eines Metall-Keramik-Substrats gemäß einer dritten beispielhaften Ausführungsform der vorliegenden Erfindung und
- **Fig. 4**: eine schematische Darstellung eines Verfahrens zum Bearbeiten eines Metall-Keramik-Substrats gemäß einer vierten beispielhaften Ausführungsform der vorliegenden Erfindung.

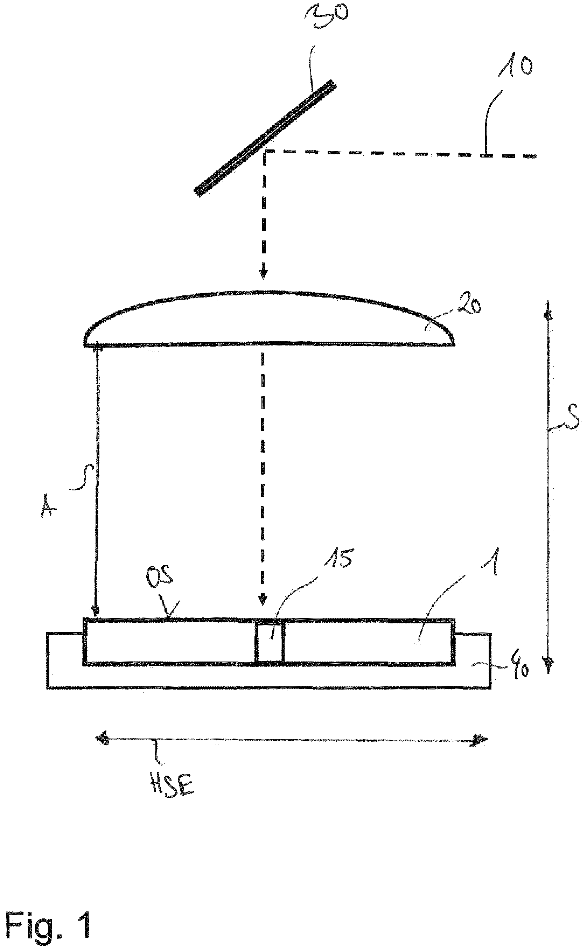

In **Figur 1** ist schematisch ein Verfahren zum Bearbeiten eines Metall-Keramik-Substrats 1 gemäß einer ersten bevorzugten Ausführungsform der vorliegenden Erfindung dargestellt. Solch ein Metall-Keramik-Substrat 1 dient vorzugsweise jeweils als Trägerelement von elektronischen bzw. elektrischen Bauteile, die an das Metall-Keramik-Substrat 1 anbindbar sind. Wesentliche Bestandteile eines solchen Metall-Keramik-Substrats 1 sind ein sich entlang einer Haupterstreckungsebene HSE erstreckendes Keramikelement 11 und eine an das Keramikelement 11 angebundene mindestens eine Metallschicht 21. Das Keramikelement 11 ist aus mindestens einem eine Keramik umfassenden Material gefertigt. Die mindestens eine Metallschicht 21 und das Keramikelement 11 sind dabei entlang einer senkrecht zur Haupterstreckungsebene HSE verlaufenden Stapelrichtung S übereinander angeordnet und in einem gefertigten Zustand über eine Anbindungsfläche zumindest bereichsweise miteinander stoffschlüssig verbunden. Das Keramikelement 11 umfasst mindestens eine Keramikschicht und kann beispielsweise auch aus mehreren Keramikschichten ausgebildet sein, zwischen denen eine Zwischenmetallisierung ausgebildet ist oder die eine Hybridkeramik ausbilden. Vorzugsweise wird die mindestens eine Metallschicht 21 dann zur Bildung von Leiterbahnen oder Anbindungsstellen für die elektrischen Bauteile strukturiert. Beispielsweise wird diese Strukturierung in die mindestens eine Metallschicht 21 eingeätzt. Im Vorfeld muss allerdings eine dauerhafte Bindung, insbesondere stoffschlüssige Anbindung, zwischen der mindestens einen Metallschicht 21 und dem Keramikelement 11 gebildet werden.

Um die mindestens eine Metallschicht 21 dauerhaft an das Keramikelement 11 anzubinden, umfasst eine Anlage zur Herstellung des Metall-Keramik-Substrats 1, insbesondere in einem DCB oder DAB - Anbindungsverfahren, einen Ofen, in dem ein gestapelte Anordnung aus dem Keramikelement 11 und der mindestens einen Metallschicht 21 erhitzt wird und so die Bindung erzielt wird. Beispielsweise handelt es sich bei der mindestens einen Metallschicht 21 um eine aus Kupfer gefertigte Metallschicht, wobei die mindestens eine Metallschicht 21 und das Keramikelement 11 mit einem DCB (Direct-Copper-Bonding) - Anbindungsverfahren miteinander verbunden werden. Alternativ lässt sich die mindestens eine Metallschicht 21 über ein Aktivlötverfahren bzw. ein Dickschichtfilmverfahren an das Keramikelement 11 anbinden.

Nach dem Anbinden, insbesondere mittels eines DCB-Verfahrens, eines Aktlötverfahrens und/oder einem Dickschichtfilmverfahren, wird das Metall-Keramik-Substrat 1 als Großkarte bereitgestellt. Derartige Großkarten sind im Folgeprozess zu vereinzeln, um jeweils vereinzelte Metall-Keramik-Substrate 1 bereitzustellen. Vorzugsweise ist es vorgesehen, für ein solches Vereinzeln, die Großkarte mittels Laserlicht 10, insbesondere mittels Ultrakurzpulslaserlicht, zu bearbeiten. Dabei ist es möglich, sofort eine Trennung mittels des Laserlichts 10 zu realisieren und/oder eine Sollbruchlinie zu bilden, entlang der im Folgeprozess die Großkarte unter Ausbildung der vereinzelten Metall-Keramik-Substrate 1 zerbrochen wird. Unter einem Ultrakurzpulslaser versteht der Fachmann insbesondere solche Laserquellen, die Laserpulse emittieren, deren Pulslänge kleiner als eine Nanosekunde sind. Vorzugsweise beträgt die Pulsdauer zwischen 0,1 und 100 ps. Ferner ist es vorstellbar, dass die Pulsdauer im Femtosekundenbereich liegt, d.h. die Pulslänge 0,1 bis 100 fs beträgt. In dem in Figur 1 dargestellten Ausführungsbeispiel ist das Metall-Keramik-Substrat 1 in einem Träger 40 angeordnet.

Entsprechend der Erfindung ist es vorgesehen, dass mit dem Laserlicht 10 des UKP Lasers, eine durchgehende Aussparung 15, im Metall-Keramik-Substrat 1 hergestellt wird. Bei der Aussparung 15 handelt es sich um eine Art Durchgangsbohrung, die beispielsweise für eine Durchkontaktierung verwendet wird und/oder eine Aussparung 15, die als Durchgangsbohrung dafür vorgesehen ist, einen Anschluss- bzw. Befestigungsbereich bereitzustellen, mit dem das Metall-Keramik-Substrat 1 als Leistungsmodul an ein Gehäuse oder eine andere Komponente gebunden ist. Dabei ist es vorstellbar, dass die Aussparung 15 zeitlich vor und/oder nach dem Herstellen der Sollbruchlinien erzeugt wird. Vorzugsweise wird zur Herstellung der Aussparung 15 und der Sollbruchlinie dasselbe Laserlicht 10, d. h. das Licht derselben Lichtquelle verwendet. Dabei ist es vorstellbar, dass sich die Intensitäten, Pulsdauern und/oder Leistungen der Pulse zur Herstellung von Sollbruchlinien von denjenigen zur Herstellung der Aussparung 15 unterscheiden.

Es ist weiter vorgesehen, dass das Metall-Keramik-Substrat 1 mittels des Trägers 40 ortsfest angeordnet ist. Um eine Sollbruchlinie und/oder eine Aussparung 15 im Metall-Keramik-Substrat 1 zu erzeugen, die insbesondere einen bestimmten Verlauf über das Metall-Keramik-Substrat 1 gesehen aufweist, ist es vorgesehen, dass Laserlicht 10 bzw. ein Laserstrahl über das Metall-Keramik-Substrat 1 verfahren wird. Mit anderen Worten: Statt das Metall-Keramik-Substrat 1 relativ zum Laserlicht 10 bzw. dessen Ausrichtung zu bewegen, ist es vorgesehen, die Ausrichtung des Laserlichts 10 bzw. Laserstrahls derart vorzunehmen, dass das über das Metall-Keramik-Substrat 1 hinweggefahrene Laserlicht 10 an den jeweiligen Auftreffpunkten eine Sollbruchlinie und/oder Aussparung 15 erzeugt. Dabei ist es vorstellbar, dass die Sollbruchlinie und/oder Aussparung 15 durchgezogen ist und/oder unterbrochen, d. h. die Sollbruchlinie liegt als Perforation vor.

Zur Ausrichtung des Laserlichts 10 ist es insbesondere vorgesehen, dass das Laserlicht 10 auf ein Spiegelelement 30 gerichtet wird. An dem Spiegelelement 30 wird der Laserstrahl 10 reflektiert und trifft anschließend auf das Metall-Keramik-Substrat 1. Dabei ist es insbesondere vorgesehen, dass das Spiegelelement 30 schwenkbar gelagert ist, insbesondere um mindestens zwei Achsen schwenkbar gelagert ist, um das Laserlicht 10 auf einen bestimmten Behandlungsbereich bzw. bestimmte Bereiche auf dem Metall-Keramik-Substrat 1 auszurichten. Weiterhin ist es bevorzugt vorgesehen, dass eine Linse 20 zwischen dem Spiegelelement 30 und dem Metall-Keramik-Substrat 1 angeordnet ist. Insbesondere erstreckt sich die Linse 20 entlang einer in der wesentlich senkrecht zur Auftreffrichtung des Laserlichts 10 verlaufenden Ebene im Wesentlichen über eine Länge, die der Länge und/oder Breite des Metall-Keramik-Substrates 1, insbesondere als Großkarte, entspricht. Mit anderen Worten: das über das Metall-Keramik-Substrat 1 fahrende Laserlicht 10 durchläuft unabhängig vom Bearbeitungsbereich stets dieselbe Linse 20.

Es hat sich dabei als besonders vorteilhaft herausgestellt, eine Linse 20 zu verwenden, deren Brennweite größer ist als 300 mm, bevorzugt größer als 350 mm und besonders bevorzugt größer als 420 mm. Das Anordnen der Linse 20 in einem Abstand A von Metall-Keramik-Substrat 1, der im Wesentlichen der Brennweite der Linse 20 entspricht, ermöglicht es dann, Sollbruchstellen bzw. Sollbruchlinien bzw. der Aussparung 15 zu erzeugen, die gegenüber einer senkrechts zur Haupterstreckungsebene HSE des Metall-Keramik-Substrats 1 verlaufenen Lotrichtung vergleichsweise gering geneigt sind. Andernfalls wäre mit einem Neigungswinkel der im Wesentlichen V-förmige bzw. kerben-förmigen Sollbruchlinien bzw. der Aussparung 15 zu rechnen. Dies gilt insbesondere für Sollbruchlinien bzw. Aussparungen 15, die am Rand des Metall-Keramik-Substrats 1 entstehen. Eine solche Schräglage wird dabei insbesondere dadurch bedingt, dass das Laserlicht 10 bzw. die Laserstrahlen nicht gleichmäßig über die gesamte Ausdehnung des Metall-Keramik-Substrats 1 senkrecht auf das Metall-Keramik-Substrat 1 auftreffen können. Durch die Verwendung der Brennweite größer als 300 mm, wird jedoch diese Schrägstellung, insbesondere in den Randbereichen des Metall-Keramik-Substrats 1 derart reduziert, dass ein Neigungswinkel gemessen bzw. bezogen auf die Lotrichtung des Metall-Keramik-Substrats 1 kleiner ist als 12°, besonders bevorzugt kleiner als 10°. Insbesondere ist festzustellen, dass eine Abweichung des Neigungswinkels im Vergleich zu der Ausrichtung der Sollbruchlinie in der Mitte des Metall-Keramik-Substrats 1 nicht größer wird als 12°. Dadurch ist es in vorteilhafter Weise möglich, zu erstellen, deren Bruchverhalten im Wesentlichen über das gesamte Metall-Keramik-Substrat 1 homogen verteilt ist.

Weiterhin ist es bevorzugt vorgesehen, dass ein Abstand A zwischen der Linse 20 und einer Oberseite OS des Metall-Keramik-Substrats 1 während des Bearbeitens zum Herstellen der Aussparung 15 verändert wird, insbesondere verkleinert wird. Dadurch ist es in vorteilhafter Weise möglich, den Fokus des Laserlichts 10, verursacht durch die Linse 20, nachzuziehen, entsprechend der bereits hergestellten Tiefe der Aussparung 15 während des Bearbeitens des Metall-Keramik-Substrats 1. Mit anderen Worten: Es ist durch das Ändern des Abstands A möglich, den sukzessiven Abtrag im Metall-Keramik-Substrat 1 zur Ausbildung der Aussparung 15 dahingehend zu berücksichtigen, dass der Fokus des Laserlichts 10 mit zunehmenden Abtrag der mindestens einen Metallschicht 21 und/oder des Keramikelements 11 weiter in das Metall-Keramik-Substrat 1 hineinversetzt wird bzw. zur Rückseite des Metall-Keramik-Substrats 1. Dadurch wird die Laserleistung in dem gerade aktuell abzutragenden Materialbereich möglichst groß gehalten, sodass mit zunehmender Abtragtiefe nicht mit einer Abnahme der Lasereffizienz bezüglich des Abtragens des Materials zu rechnen ist. Dies führt in vorteilhafter Weise zu einem beschleunigten Abtragungsprozess, der das Ausbilden der Aussparung 15 beschleunigt. Insbesondere ist es vorgesehen, dass durch das Ändern des Abstands A eine Verlagerung des Fokus entlang der Stapelrichtung S erfolgt. Dabei erfolgt die Änderung des Abstands A zwischen der Linse 20 und der Oberseite OS des Metall-Keramik-Substrats 1 vorzugsweise kontinuierlich und/oder in sukzessiven bzw. diskreten Schritten. Zur Änderung des Abstands A wird bevorzugt die Linse 20 entlang einer senkrecht zur Haupterstreckungsebene HSE verlaufenden Richtung verschoben. Alternativ und/oder ergänzend ist es vorstellbar, dass der Träger 40 und somit das Metall-Keramik-Substrat 1 entlang einer parallel zur Stapelrichtung S verlaufenden Richtung verschoben wird, um so den Abstand A zwischen der Linse 20 und der Oberseite OS des Metall-Keramik-Substrats 1 zu verkleinern. Insbesondere ist es dabei vorgesehen, dass die Brennweite der Linse 20 konstant ist.

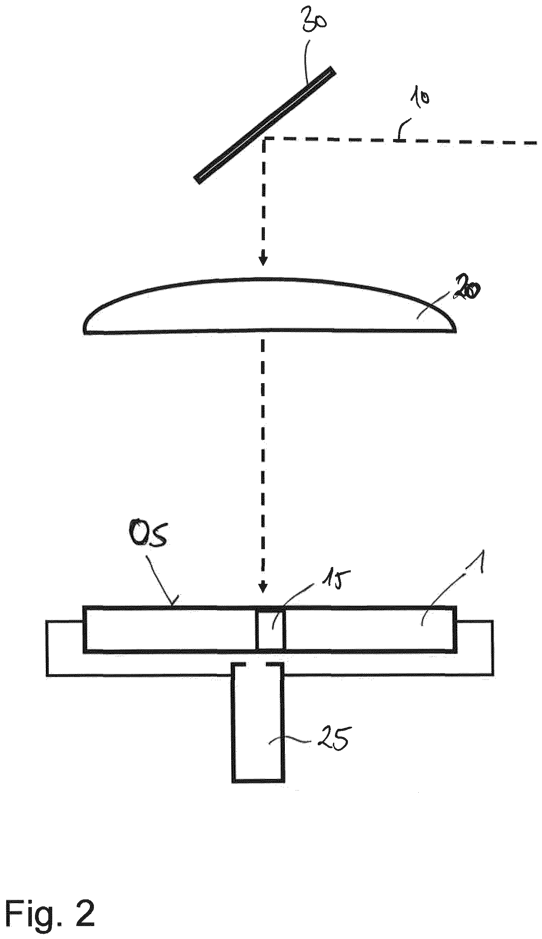

In **Figur 2** ist schematisch ein Verfahren zur Herstellung eines Metall-Keramik-Substrats 1 gemäß einer zweiten beispielhaften Ausführungsform der vorliegenden Erfindung dargestellt. Dabei unterscheidet sich das Verfahren aus der Figur 2 von dem Ausführungsbeispiel der Figur 1 dahingehend, dass zusätzlich eine Saugvorrichtung 25 vorgesehen ist. Diese Saugvorrichtung 25 ist beispielsweise in den Träger 40 integriert und unterhalb des Bearbeitungsbereichs, in dem die geplante Aussparung 15 realisiert wird, angeordnet. Mittels der Saugvorrichtung 25 ist es in vorteilhafter Weise möglich, einen Unterdruck zu verursachen, der abgetragene Teilchen des Metall-Keramik-Substrats 1 absaugt und/oder dafür sorgt, dass ein im Rahmen des Bearbeitens des Metall-Keramik-Substrats 1 bzw. beim Ausbilden der Aussparungen 15 abgetrennter Teilbereich des Metall-Keramik-Substrats 1 vom Metall-Keramik-Substrat 1 mit der Aussparung 15 getrennt werden kann. Dies betrifft insbesondere das Bearbeiten zur Herstellung von Aussparungen 15, deren Querschnitt sehr viel größer ist als ein Querschnitt des Laserlichts 10 in einer parallel zur Haupterstreckungsebene HSE verlaufenden Richtung. In einem solchen Szenario, bei dem der Durchmesser bzw. ein Querschnitt des Laserlichts 10 kleiner ist als ein Querschnitt der Aussparung 15 folgt das Laserlicht 10 während des Bearbeitens einer Bewegung entlang einer Bearbeitungsrichtung B, die beispielsweise die Kontur der Aussparung 15 in einer parallel zur Haupterstreckungsebene HSE verlaufenden Ebene festlegt. Der von der Kontur umschlossene Teilbereich des Metall-Keramik-Substrats 1, wird dann anschließend als Reststück vom Unterdruckmechanismus am Träger 40 fixiert, während das übrige, fertig bearbeite Teil des Metall-Keramik-Substrats 1 vom Träger 40 gelöst wird.

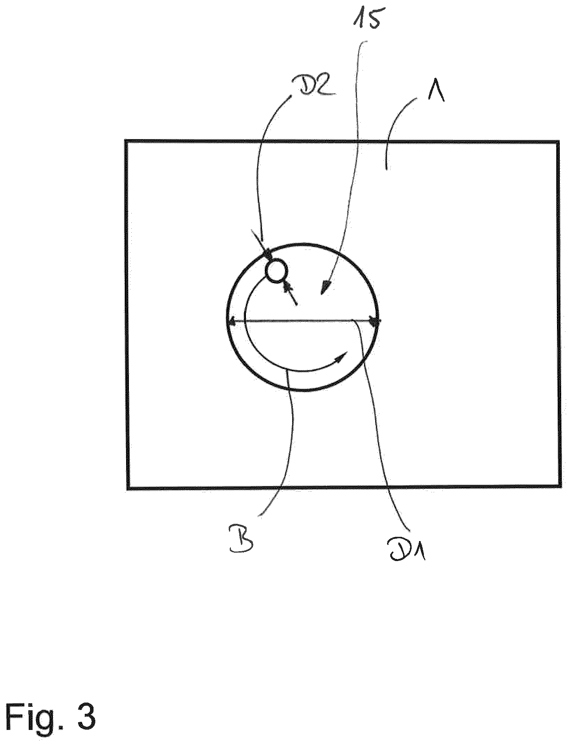

In **Figur 3** ist schematisch ein Verfahren zur Herstellung einer Aussparung 15 in einem Metall-Keramik-Substrat 1 gemäß einer dritten beispielhaften Ausführungsform der vorliegenden Erfindung dargestellt. Insbesondere zeigt die Figur 3 eine Draufsicht auf das Metall-Keramik-Substrat 1 und das Bewegen des Laserlichts 10 entlang einer Bewegungsrichtung B, unter Ausbildung einer kreisförmigen oder bogenförmigen Kontur. Denkbar ist auch, dass das Laserlicht 10 einer spiralförmigen Kontur folgt, insbesondere mit abnehmendem und/oder zunehmendem Radius. Insbesondere ist es vorgesehen, durch eine entsprechend gewählte Bearbeitungsrichtung B einen kreisförmigen Konturverlauf für die Aussparung 15 zu realisieren. Dabei ist es vorgesehen, dass die Aussparung 15 einen ersten Durchmesser D1 und das Laserlicht 10 in einer parallel zur Haupterstreckungsebene HSE verlaufenden Ebene einen zweiten Durchmesser D2 aufweist. Dabei ist das Verhältnis des zweiten Durchmessers D2 zum ersten Durchmesser D1 kleiner als 0,2, bevorzugt kleiner als 0,1 und besonders bevorzugt kleiner als 0,05. Alternativ zu einer kreisförmigen Bewegungsrichtung B sind auch polygone Bewegungsrichtungen B und/oder zumindest abschnittsweise linienförmige Bewegungsrichtungen B vorstellbar.

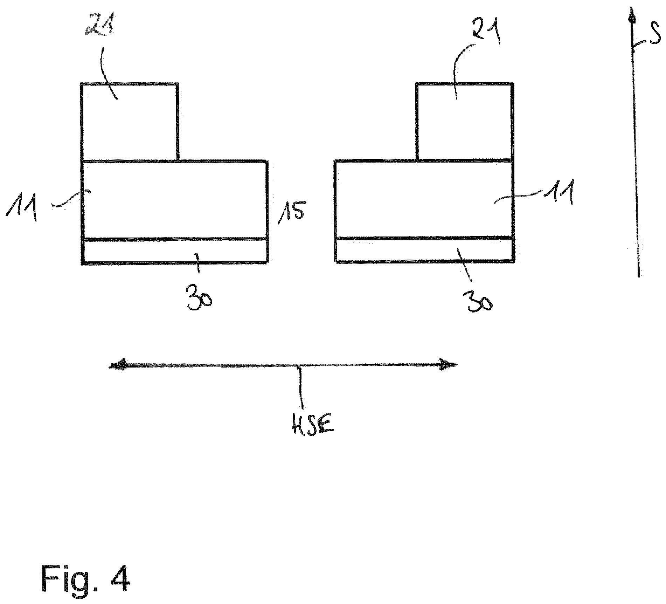

In **Figur 4** ist schematisch ein Verfahren zum Bearbeiten eines Metall-Keramik-Substrats 1 gemäß einer vierten bevorzugten Ausführungsform dargestellt. Insbesondere zeigt die Figur 4 eine Schnittansicht durch das Metall-Keramik-Substrat 1 entlang einer senkrecht zur Haupterstreckungsebene HSE verlaufenden Schnittebene. Dabei ist es insbesondere vorgesehen, dass während des Bearbeitens des Laserlichts 10, insbesondere zum Herstellen der Durchbohrung bzw. der durchgehenden Aussparung 15, eine Rückseitenmetallisierung 30 ebenfalls mittels des Laserlichts 10, insbesondere des Laserlichts 10 aus Ultrakurzpulslasern abgetragen wird. Durch das Verwenden von Ultrakurzpulslasern bei dem Erzeugen der Aussparung 15 ist es in vorteilhafter Weise möglich, das Ausbilden von Graten zu vermeiden, die zum Beispiel typischerweise bei der Herstellung mit CO₂-Lasern ausgebildet sind. In entsprechender Weise lässt sich so ein Nachbearbeitungsschritt zum Entgraten der ausgebildeten Graten vermeiden. Dies erweist sich vorteilhaft in Hinblick auf die Zeit zum Fertigen des Metall-Keramik-Substrats 10 mit der Aussparung 15. Ensprechend der Erfindung ist es vorgesehen, dass die Aussparung 15 zur Aufnahme eines Befestigungselements, wie beispielsweise zur Aufnahme eines Bolzens und/oder einer Schraube, ist, die durch die Aussparung 15 hindurchreicht, um das Metall-Keramik-Substrat 1 an einem Gehäuse oder einem anderen Bauteil zu fixieren.

### Bezugszeichen:

- 1: Metall-Keramik-Substrat
- 10: Laserlicht
- 11: Keramikelement
- 15: Aussparung
- 20: Linse
- 21: Metallschicht
- 25: Saugvorrichtung
- 30: Rückseitenmetallisierung
- OS: Oberseite
- HSE: Haupterstreckungsebene
- S: Stapelrichtung
- B: Bearbeitungsrichtung
- D1: erster Durchmesser
- D2: zweiter Durchmesser
- 25: Saugvorrichtung
- 30: Rückseitenmetallisierung
- OS: Oberseite
- HSE: Haupterstreckungsebene
- S: Stapelrichtung
- B: Bearbeitungsrichtung
- D1: erster Durchmesser
- D2: zweiter Durchmesser

## Patentansprüche

1. Verfahren zum Bearbeiten und Befestigen eines Metall-Keramik-Substrats (1), umfassend
- Bereitstellen eines Metall-Keramik-Substrats (1), wobei das Metall-Keramik-Substrat (1) mindestens eine Metallschicht (21) und ein Keramikelement (11) umfasst, die sich entlang einer Haupterstreckungsebene (HSE) erstrecken und entlang einer senkrecht zur Haupterstreckungsebene (HSE) verlaufenden Stapelrichtung (S) übereinander angeordnet sind
**gekennzeichnet durch** das folgende:
- Ausbilden einer durchgehenden Aussparung (15), im Metall-Keramik-Substrats (1) durch Bearbeiten mittels Laserlichts (10), insbesondere eines Ultrakurzpuls (UKP) Lasers, so dass die Aussparung (15) als Bereich zum Befestigen verwendet wird, und Befestigen das Metall-Keramik-Substrates (1) mit einem Gehäuse und/oder einem anderen Bauteil durch ein Befestigungselement, das durch die Aussparung (15) durchgreift.

2. Verfahren gemäß Anspruch 1, wobei ein parallel zur Haupterstreckungsebene (HSE) verlaufender Querschnitt der Aussparung (15) größer als ein entlang derselben Ebene vermessener Querschnitt des Laserlichts (10).

3. Verfahren gemäß Anspruch 2, wobei der Querschnitt der Aussparung (15) einen ersten Durchmesser und der Querschnitt des Laserlichts einen zweiten Durchmesser aufweist, wobei ein Verhältnis des zweiten Durchmessers zum ersten Durchmesser einen Wert unterhalb von 0,2 annimmt.

4. Verfahren gemäß einem der vorhergehenden Ansprüche, wobei das Laserlicht (10) über eine Linse (20) auf einen Bearbeitungsbereich des Metall-Keramik-Substrats (1) gerichtet wird und wobei während des Bearbeitens ein Abstand (A) zwischen der Linse (20) und einer Oberseite (OS) des Metall-Keramik-Substrats (1) geändert wird.

5. Verfahren gemäß einem der vorhergehenden Ansprüche, wobei eine Brennweite der Linse (L) größer als 300 mm ist, bevorzugt größer als 350 mm und besonders bevorzugt größer als 430 mm.

6. Verfahren gemäß Anspruch 5, wobei eine Änderung des Abstands (A) kontinuierlich oder in diskreten Schritten vorgenommen wird.

7. Verfahren gemäß einem der vorhergehenden Ansprüche, wobei das Metall-Keramik-Substrat (1) mindestens eine Rückseitenmetallisierung (30) aufweist, wobei insbesondere die mindestens eine Rückseitenmetallisierung (30) und die mindestens eine Metallisierung (21) an einander gegenüberliegenden Seiten des Keramikelements (11) angeordnet sind.

8. Verfahren gemäß einem der vorhergehenden Ansprüche, wobei zur Ausbildung der Aussparung (15) das Laserlicht (10) zumindest abschnittsweise entlang einer gebogenen Kontur geführt wird.

9. Verfahren gemäß einem der vorhergehenden Ansprüche, wobei ein abgetrennter Bestandteil des Metall-Keramik-Substrats (1) entfernt wird, vorzugsweise mittels eines Unterdruckmechanismus.

10. Verfahren gemäß einem der vorhergehenden Ansprüche, wobei die Aussparung (15) durch das widerholte Überfahren des Metall-Keramik-Substrats (1) mit dem Laserlicht (10) entlang derselben Kontur erzeugt wird.

11. Verfahren gemäß einem der vorhergehenden Ansprüche, wobei das Laserlicht (10) während des Bearbeitens senkrecht auf die Oberseite des Metall-Keramik-Substrats (1) trifft.

12. Verfahren gemäß einem der vorhergehenden Ansprüche, wobei ein weiteres Laserlicht vorgesehen ist, wobei mittels des Laserlichts (10) und des weiteren Laserlichts die Aussparung (15) ausgebildet wird.

13. Verfahren gemäß einem der vorhergehenden Ansprüche, wobei ein Keramikelement des Metall-Keramik-Substrats (1) glasfrei ist.

## Claims

1. A method for processing and attaching a metal-ceramic substrate (1), comprising
- Providing a metal-ceramic substrate (1), wherein the metal-ceramic substrate (1) comprises at least a metal layer (21) and a ceramic element (11) extending along a main extension plane (HSE) and arranged on top of one another along a stacking direction (S) perpendicular to the main extension plane (HSE) **characterized by** the following:
- forming a continuous recess (15), in the metal-ceramic substrate (1) by processing by means of laser light (10), in particular an ultrashort pulse (UKP) laser, such that the recess (15) is used as an area for attaching, and
- attaching the metal-ceramic substrate to a housing and/or another structural component by means of an attaching element passing through the recess (15).

2. The method of claim 1, wherein a cross-section of the recess (15) extending parallel to the main extension plane (HSE) is greater than a cross-section of the laser light (10) measured along the same plane.

3. The method according to claim 2, wherein the cross-section of the recess (15) has a first diameter and the cross-section of the laser light has a second diameter, wherein a ratio of the second diameter to the first diameter has a value below 0.2.

4. The method according to any one of the preceding claims, wherein the laser light (10) is directed across a lens (20) to a processing area of the metal-ceramics substrate (1), and wherein a distance (A) between the lens (20) and an upper side (OS) of the metal-ceramic substrate (1) is changed during processing.

5. The method according to any one of the preceding claims, wherein a focal length of the lens (L) is greater than 300 mm, more preferably greater than 350 mm, and more preferably greater than 430 mm.

6. The method according to claim 5, wherein a change in the distance (A) is made continuously or in discrete steps.

7. The method according to any one of the preceding claims, wherein the metal-ceramic substrate (1) comprises at least one backside metallization (30), wherein in particular the at least one backside metallization (30) and the at least one metallization (21) are arranged on opposite sides of the ceramic element (11).

8. The method according to any one of the preceding claims, wherein the laser light (10) is guided along a curved contour at least in sections to form the recess (15).

9. The method according to any one of the preceding claims, wherein a separated component of the metal-ceramic substrate (1) is removed, preferably by means of a vacuum mechanism.

10. The method according to any one of the preceding claims, wherein the recess (15) is created by repeatedly traversing the metal-ceramic substrate (1) with the laser light (10) along the same contour.

11. The method according to any of the preceding claims, wherein the laser light (10) is incident perpendicularly on the upper side of the metal-ceramic substrate (1) during processing.

12. The method according to any one of the preceding claims, wherein a further laser light is intended, wherein by means of the laser light (10) and the further laser light the recess (15) is formed.

13. The method according to any one of the preceding claims, wherein a ceramic element of the metal-ceramic substrate (1) is glass-free.

## Revendications

1. Procédé d'usinage et de fixation d'un substrat métal-céramique (1), consistant à :
- fournir un substrat métal-céramique (1), le substrat métal-céramique (1) comprenant au moins une couche métallique (21) et un élément céramique (11) qui s'étendent le long d'un plan d'extension principale (HSE) et qui sont superposés le long d'une direction d'empilement (S) perpendiculaire au plan d'extension principale (HSE),
**caractérisé par** les étapes consistant à :
- former un évidement continu (15) dans le substrat métal-céramique (1) par usinage au moyen d'une lumière laser (10), en particulier d'un laser à impulsions ultracourtes (UKP), de sorte que l'évidement (15) est utilisé comme zone pour la fixation, et
- fixer le substrat métal-céramique (1) à un boîtier et/ou à une autre pièce au moyen d'un élément de fixation qui passe à travers l'évidement (15).

2. Procédé selon la revendication 1,
dans lequel une section transversale de l'évidement (15) parallèle au plan d'extension principale (HSE) est supérieure à une section transversale de la lumière laser (10) mesurée le long du même plan.

3. Procédé selon la revendication 2,
dans lequel la section transversale de l'évidement (15) présente un premier diamètre, et la section transversale de la lumière laser présente un deuxième diamètre, un rapport du deuxième diamètre sur le premier diamètre prenant une valeur inférieure à 0,2.

4. Procédé selon l'une des revendications précédentes,
dans lequel la lumière laser (10) est dirigée sur une zone d'usinage du substrat métal-céramique (1) par l'intermédiaire d'une lentille (20), et
pendant l'usinage, une distance (A) entre la lentille (20) et une face supérieure (OS) du substrat métal-céramique (1) est modifiée.

5. Procédé selon l'une des revendications précédentes,
dans lequel une distance focale de la lentille (L) est supérieure à 300 mm, de préférence supérieure à 350 mm et de manière particulièrement préférée supérieure à 430 mm.

6. Procédé selon la revendication 5,
dans lequel une modification de la distance (A) est effectuée de manière continue ou par étapes discrètes.

7. Procédé selon l'une des revendications précédentes,
dans lequel le substrat métal-céramique (1) comporte au moins une métallisation de face arrière (30),
en particulier, ladite au moins une métallisation de face arrière (30) et ladite au moins une métallisation (21) sont disposées sur des côtés opposés de l'élément céramique (11).

8. Procédé selon l'une des revendications précédentes,
dans lequel, pour former l'évidement (15), la lumière laser (10) est guidée au moins localement le long d'un contour incurvé.

9. Procédé selon l'une des revendications précédentes,
dans lequel un composant séparé du substrat métal-céramique (1) est enlevé, de préférence au moyen d'un mécanisme à vide.

10. Procédé selon l'une des revendications précédentes,
dans lequel l'évidement (15) est réalisé par le passage répété de la lumière laser (10) sur le substrat métal-céramique (1) le long du même contour.

11. Procédé selon l'une des revendications précédentes,
dans lequel, pendant l'usinage, la lumière laser (10) tombe perpendiculairement sur la face supérieure du substrat métal-céramique (1).

12. Procédé selon l'une des revendications précédentes,
dans lequel est prévue une autre lumière laser, l'évidement (15) étant formé au moyen de la lumière laser (10) et de l'autre lumière laser.

13. Procédé selon l'une des revendications précédentes,
dans lequel un élément céramique du substrat métal-céramique (1) est exempt de verre.
